# EUROPÄISCHE PATENTSCHRIFT

(11) **EP 1 308 059 B1**
(45) Veröffentlichungstag und Bekanntmachung des Hinweises auf die Patenterteilung: **21.01.2004**
(21) Anmeldenummer: 01964873.2
(22) Anmeldetag: 31.07.2001
(51) Int. Cl.: H04Q 7/30, H04B 7/26

(54) **VERFAHREN UND BASISSTATIONSSYSTEM ZUM AUFBAU EINER VERBINDUNG IN EINEM MOBILFUNKSYSTEM**
METHOD AND BASE STATION SYSTEM FOR SETTING UP A CONNECTION IN A MOBILE RADIO TELEPHONE SYSTEM
PROCEDE ET SYSTEME DE STATION DE BASE POUR ETABLIR UNE LIAISON DANS UN SYSTEME DE TELEPHONIE MOBILE

(30) Priorität: 07.08.2000 DE 10038484
(43) Veröffentlichungstag der Anmeldung: 07.05.2003
(73) Patentinhaber: Siemens Aktiengesellschaft, 80333 München (DE)
(72) Erfinder: SCHINDLER, Jürgen, 10555 Berlin (DE); HOEYNCK, Andreas, 16540 Hohen Neuendorf (DE); GESSNER, Christina, 81373 München (DE); SCHNIEDENHARN, Jörg, 13587 Berlin (DE); TRAYNARD, Jean-Michel, 81667 München (DE); KÖHN, Reinhard, 14197 Berlin (DE)
(86) Internationale Anmeldenummer: PCT/DE2001/002908
(87) Internationale Veröffentlichungsnummer: WO 2002/013546

(56) Entgegenhaltungen:
- EP-A- 0 929 203
- GB-A- 2 320 653

## Beschreibung

Die Erfindung betrifft ein Verfahren und ein Basisstationssystem zum Aufbau einer Verbindung in einem Mobilfunksystem.

Unter Basisstationssystem wird derjenige Teil eines Mobilfunksystems verstanden, der wenigstens einen Basisstationscontroller und in der Regel mehrere diesem Controller zugeordnete Basisstationen aufweist.

Der Aufbau einer Verbindung in einem Mobilfunksystem auf Wunsch einer Teilnehmerstation kann beispielsweise zweistufig erfolgen. Hierzu übermittelt die Teilnehmerstation auf einem Kanal zum wahllosen Zugriff eine Sequenz bzw. Signatur an die Basisstation. Die Basisstation teilt der Teilnehmerstation daraufhin auf einem Antwortkanal (FPACH, Fast Physical Access Channel) mit, ob ihr eine Verbindung zugeteilt werden soll oder nicht. Hat der Basisstationscontroller über die Basisstation der Mobilstation den weiteren Zugriff gestattet, so kann die Mobilstation sich beim Controller anmelden. Hierzu schickt die Teilnehmerstation Zusatzinformationen, die für den Verbindungsaufbau bestimmt sind, wie beispielsweise eine ihr zugeordnete Kennung oder Angaben über den von ihr unterstützten Sendeleistungsbereich über einen speziell hierfür bestimmten Kanal (PRACH, Physical Random Access Channel) an die Basisstation.

Für die Verknüpfung der Signaturen, der Kanäle für die Antwort der Basisstation und des PRACHs gibt es mehrere Möglichkeiten:
a) Es gibt eine N:1 Beziehung zwischen den Signaturen bzw. Sequenzen und den Antwortkanälen der Basisstation. D.h., für N verschiedenen Signaturen wird die Antwort auf einem bestimmten Kanal der Basisstation gesendet. Außerdem gibt es eine 1:1 Beziehung zwischen den Antwortkanälen der Basistation und den zur Verfügung gestellten PRACHs.
b) Es gibt eine N:1 Beziehung zwischen den Signaturen und den Antwortkanälen der Basisstation. D.h., für N verschiedenen Signaturen wird die Antwort auf einem bestimmten Kanal der Basisstation gesendet. Es gibt eine 1:M, M > 1 Beziehung zwischen den Antwortkanälen der Basistation und den PRACHs.

Nach OSI beschriebene Mobilfunksysteme (im folgenden "Mobilfunkstandards" bzw. einfach "Standards" genannt) sind nach festen Regeln der Protokollspezifikation aufgebaut. Das bedeutet, dass jedem Standard ein eigenes Protokoll zugeordnet ist, dass die Kommunikation im System in allen Schichten des ISO/OSI-Modells definiert. Grundprinzip ist hierbei, dass jeder der sieben im ISO/OSI-Modell beschriebenen Kommunikationsschichten ganz bestimmte Aufgaben zukommen. Jede Schicht kann dabei unabhängig von den anderen Schichten betrachtet werden. Daher ist es theoretisch möglich, für eine gegebene physikalische Schicht (Schicht 1) für unterschiedliche Standards eine beliebige Anzahl unterschiedlicher darüberliegende Schichten (Schicht 2, Schicht 3, ...) zu definieren. Will man nun unterschiedliche über der physikalischen Schicht befindlichen Protokolle in einer Mobilfunkzelle, d.h. mit einer Basisstation, in ein und demselben Frequenzband betreiben, so ist es erforderlich, zu identifizieren, welchen Protokollstack (dieser beschreibt das jeweilige Protokoll) die Teilnehmerstation verwendet. Nicht jede Teilnehmerstation wird nämlich gleichzeitig alle von der Basisstation und dem zugehörigen Basisstationscontroller (dem Basisstationssystem) unterstützten Standards unterstützen. Würde das Basisstationssystem mit der Teilnehmerstation nicht gemäß dem richtigen Standard kommunizieren, wäre letztere nicht in der Lage, die empfangenen Informationen zu verarbeiten. Die Protokolle der unterschiedlichen Standards sehen nämlich den Austausch völlig verschiedener Informationen und/oder den Austausch von Informationen in völlig verschiedenen Formaten vor. Die Identifikation des von der Teilnehmerstation unterstützten Standards sollte zu einem möglichst frühen Zeitpunkt während der Kommunikation zwischen Basisstationssystem und Teilnehmerstation erfolgen.

GB-A-2 320 653 offenbart ein Verfahren zur Bestimmung des zu nutzenden Kommunikations protokolls wobei anhand der Charakteristika eines von einer Teilnehmerstation eingehenden Verbindungswunsches der von der Teilnehmerstation benutzte Kommunikationsstandard bestimmt wird und dieser in der Folge von der Basisstation benutzt wird.

Der Erfindung liegt die Aufgabe zugrunde, eine frühzeitige Identifikation des von einer Teilnehmerstation unterstützten Mobilfunkstandards in Mobilfunksystemen zu ermöglichen, die mehrere Mobilfunkstandards unterstützen.

Diese Aufgabe wird mit einem Verfahren zum Aufbau einer Verbindung gemäß Anspruch 1 sowie ein Basisstationssystem gemäß Anspruch 9 gelöst. Vorteilhafte Aus- und Weiterbildungen der Erfindung sind Gegenstand abhängiger Ansprüche.

Das Verfahren zum Aufbau einer Verbindung in einem Mobilfunksystem mit wenigstens einer Teilnehmerstation, die wenigstens einen ersten Mobilfunkstandard unterstützt, und wenigstens einem Basisstationssystem, das den ersten und wenigstens einen zweiten Mobilfunkstandard unterstützt, sieht folgende Schritte vor:
- Die Teilnehmerstation signalisiert dem Basisstationssystem einen Aufbauwunsch,
- das Basisstationssystem signalisiert der Teilnehmerstation, dass ihrem Wunsch entsprechend eine Verbindung hergestellt werden soll,
- die Teilnehmerstation überträgt anschließend für den Verbindungsaufbau bestimmte Zusatzinformationen über einen Kanal zum Basisstationssystem, der eindeutig einem der von ihr unterstützten Standards zugeordnet ist,
- und anhand des von der Teilnehmerstation für die Übertragung der Zusatzinformationen benutzten Kanals wird der von der Teilnehmerstation unterstützte Standard identifiziert, woraufhin das Basisstationssystem mit der Teilnehmerstation entsprechend diesem Standard kommuniziert.

Die Aussendung des Aufbauwunsches sowie die Antwort des Basisstationssytems erfolgt für beide Mobilfunkstandards in gleicher Weise. Beides kann dabei z.B. vollständig in der physikalischen Schicht (Schicht 1 des Schichtenmodells) erfolgen. Erst die Übermittlung der Zusatzinformationen, die die Teilnehmerstation an das Netzwerk sendet, ist spezifisch für den jeweiligen Standard bzw. Protokollstack.

Eine Identifikation des von der Teilnehmerstation verwendeten Standards kann gewährleistet werden, indem für den ersten Standard einer oder mehrere Kanäle für die Übermittlung der Zusatzinformationen vorgesehen sind, die sich von denjenigen des zweiten Standards unterscheiden. Die Teilnehmerstation verwendet in Abhängigkeit des von ihr verwendeten Standards die zugewiesenen Kanäle für die Übermittlung der Zusatzinformationen. Das empfangende Basistationssystem, vorzugsweise der Basisstationscontroller, kann anhand des von der Teilnehmerstation verwendeten Kanals dann problemlos identifizieren, zu welchem Protokollstack bzw. Standard die empfangenen Zusatzinformationen gehören.

Unter dem Begriff "Kanal" wird hier jede Ressource des Mobilfunksystems verstanden, die sich von anderen Ressourcen durch wenigstens eine Vielfachzugriffskomponente unterscheidet. Bei CDMA-Systemen ist diese Vielfachzugriffskomponente ein Spreizcode, bei TDMA-Systemen ein Zeitschlitz und bei FDMA-Systemen eine Frequenz. Vorteilhafter Weise unterscheidet sich der von der Teilnehmerstation zur Übermittlung der Zusatzinformationen verwendete Kanal von eindeutig anderen Standards für diesen Zweck zugeordneten Kanälen demnach hinsichtlich eines Spreizcodes, eines Zeitschlitzes und/oder einer Frequenz.

Nach einer Weiterbildung der Erfindung übermitteln mehrere Teilnehmerstationen ihre Wünsche für einen Verbindungsaufbau kollisionsbehaftet auf einem Kanal für den wahlfreien Zugriff an das Basisstationssystem. Dabei kann die Signalisierung des Aufbauwunsches jeweils durch Übermittlung einer von der Teilnehmerstation aus einer Gruppe von zu diesem Zweck vorgesehenen Sequenzen ausgewählten Sequenz erfolgt. Dies geschieht z.B. durch Übertragung der Sequenz bzw. Signatur auf dem Kanal zum wahlfreien Zugriff.

Ein Vorteil der Erfindung besteht darin, dass die Leistungsfähigkeit des Zugriffsverfahrens zum Aufbau einer Verbindung in keiner Weise berührt wird, da der kollisionsbehaftete Teil des Zugriffs (Übermittlung des Aufbauwunsches) gegenüber bekannten zweistufigen Zugriffsverfahren nicht verändert wird. Insbesondere kann die Anzahl der Sequenzen unverändert gegenüber bekannten Lösungen gehalten werden.

Das beschriebene Verfahren kann Bedeutung bei der Integration des sogenannten TD-SCDMA-Systems in die UMTS-Spezifikationen (die durch die sogenannte 3GPP-Projektgruppe entworfen werden) gewinnen. Das TD-SCDMA-System wird momentan von der chinesischen Standardisierungsorganisation CWTS mit eigenen Protokollstacks spezifiziert. Die Standardisierungsarbeit der CWTS wird in der 3GPP zwar nicht anerkannt. Trotzdem ist es wünschenswert, dass sowohl die Protokollstacks, die die CWTS standardisiert, als auch die von der 3GPP spezifizierten Protokollstacks in einem Frequenzband koexistieren können.

Die Teilnehmerstation kann dadurch Kenntnis vom dem jeweiligen Standard zugeordneten Kanal für die Übermittlung der Zusatzinformationen bekommen, dass das Basisstationssystem der Teilnehmerstation vorab mitteilt, welchem der von der Basisstation bzw. dem Basisstationssystem unterstützten Standards welcher Kanal für die Übertragung der Zusatzinformationen zugeordnet ist. Die Teilnehmerstation kann dann den Kanal entsprechend dem von ihr unterstützten Standard für die Übertragung der Zusatzinformationen auswählen. Die Mitteilung der den Standards für die Übermittlung der Zusatzinformationen zugeordneten Kanäle kann z.B. über von der Basisstation in einem Broadcast-Betrieb (also der Übertragung an alle in der Funkzelle befindlichen Teilnehmerstationen) ausgesendete Organisationsinformationen erfolgen.

Alternativ kann der für den von der Teilnehmerstation für die Übertragung der Zusatzinformationen zu verwendende Kanal, der dem von ihr unterstützten Standard eindeutig zugeordnet ist, in der Teilnehmerstation fest gespeichert sein. Dies kann beispielsweise bereits durch den Hersteller der Teilnehmerstation erfolgen. Hierdurch erübrigt sich eine Aussendung dieser Informationen durch die Basisstation. Voraussetzung ist hier, dass der Basisstation diese Informationen ebenfalls zur Verfügung stehen.

Die Erfindung wird im Folgenden anhand von in den Figuren dargestellten Ausführungsbeispielen näher beschrieben. Es zeigen:
- Figur 1: ein erstes Ausführungsbeispiel der Erfindung und
- Figur 2: ein zweiten Ausführungsbeispiel.

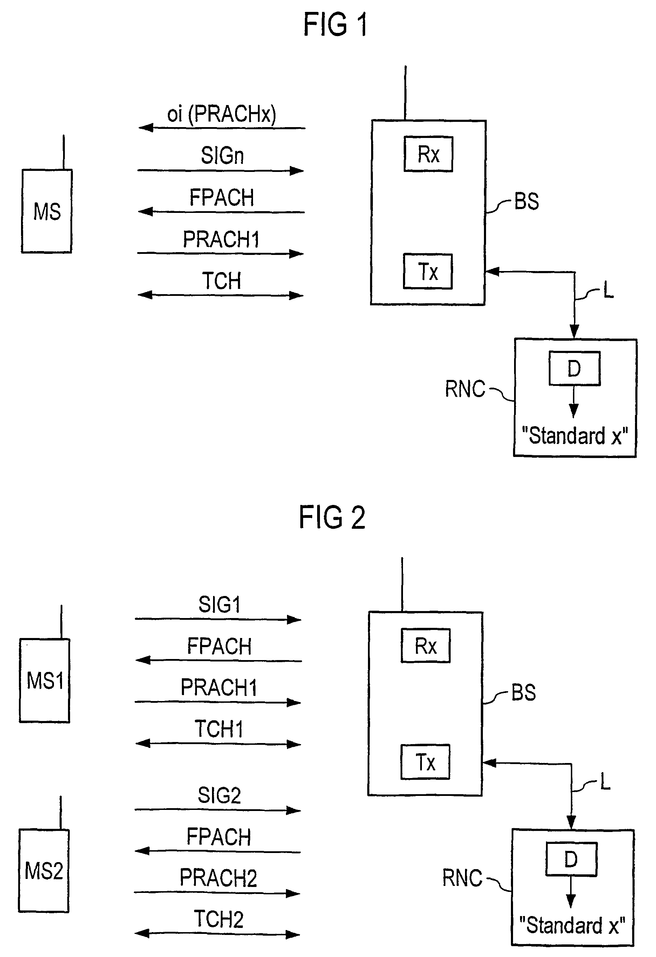

Figur 1 zeigt eine mobile Teilnehmerstation MS eines Mobilfunksystems. Die Erfindung ist aber ebenso auf nicht mobile Teilnehmerstationen anwendbar. Vom Mobilfunksystem ist in Figur 1 lediglich ein Teil eines Basisstationssystems dargestellt, nämlich eine Basisstation BS sowie ein Basisstationscontroller RNC, der diese und weitere (nicht dargestellte) Basisstationen kontrolliert. Er ist mit der Basisstation BS über eine Leitung L verbunden. Bei diesem Ausführungsbeispiel unterstützt das Basisstationssystem BS, RNC sowohl einen ersten Mobilfunkstandard als auch einen zweiten Mobilfunkstandard, während die Teilnehmerstation MS lediglich einen der beiden Standards unterstützt. Jeder Standard arbeitet nach einem für ihn spezifischen Protokoll. Zunächst ist dem Basisstationssystem allerdings unbekannt, welcher Standard von der Teilnehmerstation unterstützt wird.

Die Basisstation BS überträgt an alle in der von ihr versorgten Funkzelle befindlichen Teilnehmerstationen MS Organisationsinformationen oi, die u.a. die von ihr verwendete Frequenz beinhalten. Außerdem übermittelt die Basisstation auf diese Weise eine Menge von zulässigen (Bit-) sequenzen, derer sich die Teilnehmerstationen zum Mitteilen eines Aufbauwunsches für eine Verbindung bedienen können. Außerdem geben die Organisationsinformationen oi an, welchen Kanal PRACHx (Physical Random Access Channel) die Teilnehmerstationen MS benutzen dürfen, um (wie weiter unten noch erläutert wird) für den Verbindungsaufbau bestimmte Zusatzinformationen an die Basisstation BS zu übermitteln. Dieser Kanal PRACHx ist für jeden vom Basisstationssystem unterstützten Standard unterschiedlich. Daher teilt die Basisstation über die Organisationsinformationen für jeden dieser Standards einen separaten Kanal PRACHx für die Übermittlung der Zusatzinformationen durch die Teilnehmerstationen mit. Bei anderen Ausführungsbeispielen können auch mehrere separate Kanäle für die Zusatzinformationen pro unterstütztem Standard vorgesehen sein.

Sobald die Teilnehmerstation MS eine Verbindung zur Basisstation aufbauen möchte, wählt sie eine der ihr über die Organisationsinformationen oi mitgeteilten Sequenzen SIGn zufällig aus und überträgt diese als Aufbauwunsch über einen Kanal für den wahlfreien Zugriff zur Basisstation BS. Wenn gleichzeitig mehrere Teilnehmerstationen auf diese Weise einen Aufbauwunsch signalisieren, ist dies nur unschädlich, sofern jede eine andere Sequenz verwendet. Verwenden zwei Teilnehmerstationen MS in derselben Funkzelle dieselbe Sequenz, kommt es zu einer Kollision auf dem Kanal zum wahlfreien Zugriff, so dass die Basisstation BS unter Umständen keinen der beiden Aufbauwünsche berücksichtigen kann.

Von der Basisstation BS wird der Teilnehmerstation anschließend signalisiert, dass eine Verbindung entsprechend ihrem Aufbauwunsch hergestellt werden soll. Dies geschieht über einen Antwortkanal FPACH (Fast Physical Access Channel). Bislang hat das Basisstationssystem immer noch keine Kenntnis über den von der Teilnehmerstation MS unterstützten Standard. Bis hierhin verläuft der Verbindungsaufbau für alle vom Basisstationssystem unterstützten Standards identisch. D.h. es wird derselbe Kanal für den wahlfreien Zugriff, dieselben Sequenzen SIGn und derselbe FPACH benutzt, egal welchen der vom Basisstationssystem unterstützten Standards die Teilnehmerstation MS unterstützt. Erst der nächste Schritt erfolgt spezifisch für den von der Teilnehmerstation MS unterstützten Standard. Als Reaktion auf die Antwort der Basisstation BS auf dem FPACH übermittelt die Teilnehmerstation MS nämlich die bereits oben erwähnten Zusatzinformationen an die Basisstation BS. Die Art dieser Informationen und ihr Format kann dabei abhängig vom von ihr unterstützten Standard sein. In jedem Fall aber erfolgt die Übermittlung der Zusatzinformationen über denjenigen Kanal PRACH1, der ihr zuvor über die Organisationsinformationen oi für den von ihr genutzten Standard zugewiesen worden ist.

Die Basisstation BS weist eine Empfangseinrichtung RX und eine Sendeeinrichtung TX auf. Die Empfangseinrichtung RX dient zum Empfang der von den Teilnehmerstationen MS übermittelten Informationen und die Sendeeinrichtung TX zum Aussenden der an die Teilnehmerstation MS zu übermittelnden Informationen. Die Basisstation BS leitet die von der Teilnehmerstation MS empfangenen Informationen über die Leitung L an den Basisstationscontroller RNC weiter. Dieser weist eine Detektionseinheit D auf, die dazu dient, festzustellen, auf welchem Kanal PRACHx die Zusatzinformationen übermittelt werden. Nachdem festgestellt worden ist, welcher Kanal PRACHx von der Teilnehmerstation MS für die Zusatzinformationen verwendet worden ist, steht aufgrund der eindeutigen Zuordnung dieser Kanäle PRACHx zu einem der vom Basisstationssystem unterstützten Standards fest, welcher Standard von der Teilnehmerstation unterstützt wird. Anschließend kann das Basisstationssystem mit der Teilnehmerstation MS gemäß dem festgestellten Standard über eine Verkehrsverbindung TCH kommunizieren. Dies bedeutet, dass dabei das diesem Standard entsprechende Protokoll verwendet wird.

Alternativ zur Mitteilung der für die Übertragung der Zusatzinformationen jedem Standard zugewiesenen Kanäle PRACHx über die Organisationsinformationen oi können bei anderen Ausführungsbeispielen der Erfindung diese Informationen auch fest in der Teilnehmerstation MS gespeichert sein.

Figur 2 zeigt ein Ausführungsbeispiel der Erfindung, bei dem zwei Teilnehmerstationen MS1, MS2 gleichzeitig einen Wunsch zum Verbindungsaufbau an die Basisstation BS übermitteln. Die erste Teilnehmerstation MS1 unterstützt einen ersten Mobilfunkstandard und die zweite Teilnehmerstation MS2 einen zweiten Standard, während das Basisstationssystem BS, RNC beide Standards unterstützt. Die beiden Teilnehmerstationen MS1, MS2 haben zwei unterschiedliche Sequenzen SIG1, SIG2 für die Signalisierung des Verbindungswunsches aus der Gruppe von beispielsweise acht in dieser Funkzelle zur Auswahl stehenden Sequenzen zufällig ausgewählt. Die Basisstation BS antwortet beiden Teilnehmerstationen auf dem Kanal FPACH, dass ihnen jeweils eine Verkehrsverbindung zugewiesen werden soll. Daraufhin senden die beiden Teilnehmerstationen MS1, MS2 ihre Zusatzinformationen über Kanäle PRACH1, PRACH2, die eindeutig dem von ihnen unterstützten Standard zugeordnet sind. Die Detektionseinheit D des Controllers RNC erkennt den jeweiligen Kanal PRACHx und damit den jeweils unterstützten Standard für jede Teilnehmerstation MS1, MS2. Anschließend kommuniziert das Basisstationssystem BS, RNC mit den Teilnehmerstationen über ihnen jeweils zugewiesene Verkehrsverbindungen TCH1, TCH2 entsprechend dem zuvor von der Detektionseinheit D festgestellten Standard bzw. Protokoll.

Bei den Mobilfunksystemen der soeben beschriebenen Ausführungsbeispiele handelt es sich um solche mit kombiniertem TDMA/CDMA-Zugriffsverfahren. Die Kanäle PRACHx zur Übermittlung der Zusatzinformationen gemäß den unterschiedlichen Standards unterscheiden sich voneinander bezüglich ihrer CDMA-Spreizcodes, nicht jedoch hinsichtlich ihres Zeitschlitzes. Bei anderen Ausführungsbeispielen können sich diese Kanäle alternativ oder zusätzlich auch hinsichtlich ihres Zeitschlitzes unterscheiden. Bei FDMA-Systemen können sie sich auch bezüglich ihrer Frequenz unterscheiden.

Die Signalisierung des Aufbauwunsches SIGn sowie die Antwort der Basisstation BS auf dem Kanal FPACH erfolgen in der Schicht 1 des OSI/ISO-Schichtenmodells und sind für alle vom Basisstationssystem BS, RNC unterstützten Standards identisch. Insofern unterscheiden sich die Protokolle dieser Standards also nicht. Erst hinsichtlich der Versendung des für den jeweiligen Standard spezifischen Kanals PRACHx für die Übermittlung der Zusatzinformationen unterscheiden sich die Protokolle der Standards.

## Patentansprüche

1. Verfahren zum Aufbau einer Verbindung in einem Mobilfunksystem, mit einer Teilnehmerstation (MS), die wenigstens einen ersten Mobilfunkstandard unterstützt, und einem Basisstationssystem (BS, RNC), das den ersten und wenigstens einen zweiten Mobilfunkstandard unterstützt, bei dem
- die Teilnehmerstation (MS) dem Basisstationssystem (BS, RNC) einen Aufbauwunsch signalisiert (SIGn),
- das Basisstationssystem (BS, RNC) der Teilnehmerstation (MS) signalisiert (FPACH), dass ihrem Wunsch entsprechend eine Verbindung hergestellt werden soll,
- die Teilnehmerstation (MS) anschließend für den Verbindungsaufbau bestimmte Zusatzinformationen über einen Kanal (PRACHx) zum Basisstationssystem (BS, RNC) überträgt, der eindeutig einem der von ihr unterstützten Standards zugeordnet ist,
- und anhand des von der Teilnehmerstation (MS) für die Übertragung der Zusatzinformationen benutzten Kanals (PRACHx) der von der Teilnehmerstation unterstützten Standard identifiziert wird und das Basisstationssystem (BS, RNC) anschließend mit der Teilnehmerstation entsprechend diesem Standard kommuniziert.

2. Verfahren nach Anspruch 1, bei dem
- das Basisstationssystem (BS, RNC) der Teilnehmerstation (MS) vorab mitteilt, welchem der von ihr unterstützten Standards welcher Kanal (PRACHx) für die Übertragung der Zusatzinformationen zugeordnet ist,
- und die Teilnehmerstation (MS) den Kanal (PRACHx) entsprechend dem von ihr unterstützten Standard für die Übertragung der Zusatzinformationen auswählt.

3. Verfahren nach Anspruch 2, bei dem
die Mitteilung der den Standards für die Übermittlung der Zusatzinformationen zugeordneten Kanälen (PRACHx) über von einer Basisstation (BS) des Basisstationssystems (BS, RNC) in einem Broadcast-Betrieb ausgesendete Organisationsinformationen (oi) erfolgt.

4. Verfahren nach Anspruch 1, bei dem
der für den von der Teilnehmerstation (MS) für die Übertragung der Zusatzinformationen zu verwendende Kanal (PRACHx), der dem von ihr unterstützten Standard eindeutig zugeordnet ist, in der Teilnehmerstation fest gespeichert wird.

5. Verfahren nach einem der vorstehenden Ansprüche, bei dem mehrere Teilnehmerstationen (MSi) ihre Wünsche für einen Verbindungsaufbau kollisionsbehaftet auf einem Kanal für den wahlfreien Zugriff an die Basisstation (BS) übermitteln.

6. Verfahren nach Anspruch 5, bei dem
die Signalisierung des Aufbauwunsches jeweils durch Übermittlung einer von der Teilnehmerstation (MS) aus einer Gruppe von zu diesem Zweck vorgesehenen Sequenzen (SIGn) ausgewählten Sequenz erfolgt.

7. Verfahren nach einem der vorstehenden Ansprüche, bei dem sich der von der Teilnehmerstation (MS) zur Übermittlung der Zusatzinformationen verwendete Kanal (PRACHx) von eindeutig anderen Standards für diesen Zweck zugeordneten Kanälen hinsichtlich eines Spreizcodes, eines Zeitschlitzes und/oder einer Frequenz unterscheidet.

8. Verfahren nach einem der vorstehenden Ansprüche, bei dem die Identifizierung des von der Teilnehmerstation (MS) unterstützten Standards durch einen Netzwerkcontroller (RNC) des Basisstationssystems (BS, RNC) erfolgt.

9. Basisstationssystem für ein Mobilfunksystem
- das wenigstens zwei Mobilfunkstandards unterstützt,
- mit einer Empfangseinrichtung (RX) zum Empfang eines Wunsches (SIGn) wenigstens einer Teilnehmerstation (MS) zum Aufbau einer Verbindung,
- mit einer Sendeeinrichtung (TX) zum Aussenden einer Bestätigung an die Teilnehmerstation (MS), dass ihrem Wunsch entsprechend eine Verbindung hergestellt werden soll,
- dessen Empfangseinrichtung (RX) dazu dient, Zusatzinformationen, die für den Verbindungsaufbau bestimmt sind, von der Teilnehmerstation (MS) zu empfangen,
- mit einer Detektionseinheit (D), die feststellt, auf welchem Kanal (PRACHx) die Zusatzinformationen übermittelt werden
- und das anschließend mit der Teilnehmerstation (MS) gemäß einem der von ihm unterstützen Standards kommuniziert, der durch den für die Übermittlung der Zusatzinformationen verwendeten Kanal (PRACHx) eindeutig identifiziert ist.

10. Basisstationssystem nach Anspruch 9,
dessen Sendeeinrichtung (TX) dazu dient, für jeden von ihm unterstützten Standard wenigstens einen eindeutig diesem Standard zugeordneten Kanal (PRACHx) für die Übermittlung der Zusatzinformationen durch die Teilnehmerstation (MS) der Teilnehmerstation mitzuteilen.

11. Basisstationssystem nach Anspruch 10,
dessen Sendeeinrichtung (TX) die den Standards eindeutig zugeordneten Kanäle (PRACHx) für die Zusatzinformationen in Form von Organisationsinformationen (oi) in einem Broadcast-Betrieb überträgt.

## Claims

1. Method for setting up a connection in a mobile radio system, having a subscriber station (MS) which supports at least one first mobile radio standard, and having a base station system (BS, RNC) which supports the first and at least one second mobile radio standard, in which
- the subscriber station (MS) signals a setting-up wish (SIGn) to the base station system (BS, RNC),
- the base station system (BS, RNC) signals (FPACH) to the subscriber station (MS) that a connection should be set up in accordance with its wish,
- the subscriber station (MS) then transmits specific additional information for setting up the connection, via a channel (PRACHx), to the base station system (BS, RNC) which is associated uniquely with one of the standards supported by it,
- and, on the basis of the channel (PRACHx) which is used for the transmission of the additional information by the subscriber station (MS), the standard which is supported by that subscriber station is identified, and the base station system (BS, RNC) then communicates with the subscriber station in accordance with this standard.

2. Method according to Claim 1, in which
- the base station system (BS, RNC) reports in advance to the subscriber station (MS) which of the standards that are supported by it is associated with which channel (PRACHx) for the transmission of the additional information,
- and the subscriber station (MS) selects the channel (PRACHx) for the transmission of the additional information on the basis of the standard which is supported by it.

3. Method according to Claim 2, in which
the reporting of the channels (PRACHx) which are associated with the standards for the transmission of the additional information takes place by means of organization information (oi) which is transmitted in a broadcast mode by a base station (BS) in the base station system (BS, RNC).

4. Method according to Claim 1, in which
the channel (PRACHx) which is to be used for the transmission of the additional information from the subscriber station (MS) and which is uniquely associated with the standard that is supported by it is permanently stored in the subscriber station.

5. Method according to one of the preceding claims, in which two or more subscriber stations (MSi) transmit their wishes to set up a connection in a manner which is subject to collisions, on one channel for random access to the base station (BS).

6. Method according to Claim 5, in which
the signalling of the wish to set up a connection is in each case carried out by transmitting a sequence, which the subscriber station (MS) selects from a group of sequences (SIGn) that are provided for this purpose.

7. Method according to one of the preceding claims, in which the channel (PRACHx) which is used for transmitting the additional information by the subscriber station (MS) differs from channels which are uniquely associated with other standards for this purpose in terms of a spread code, a time slot and/or a frequency.

8. Method according to one of the preceding claims, in which the standard which is supported by the subscriber station (MS) is identified by a network controller (RNC) in the base station system (BS, RNC).

9. Base station system for a mobile radio system
- which supports at least two mobile radio standards,
- having a receiving device (RX) for receiving a wish (SIGn) of at least one subscriber station (MS) to set up a connection,
- having a transmitting device (TX) for transmitting an acknowledgement to the subscriber station (MS) that a connection will be set up in accordance with its wish,
- whose receiving device (RX) is used to receive additional information, which is intended for setting up a connection, from the subscriber station (MS),
- having a detection unit (D) which detects the channel (PRACHx) on which the additional information is transmitted,
- and which then communicates with the subscriber station (MS) in accordance with one of the standards which is supported by it, which is identified uniquely by the channel (PRACHx) which is used for transmission of the additional information.

10. Base station system according to Claim 9,
whose transmitting device (TX) is used (for each standard which is supported by it) to report to the subscriber station at least one channel (PRACHx), which is associated uniquely with this standard, for the transmission of the additional information by that subscriber station (MS).

11. Base station system according to Claim 10,
whose transmitting device (TX) transmits the channels (PRACHx) which are uniquely associated with the standards, for the additional information, in the form of organization information (oi) in a broadcast mode.

## Revendications

1. Procédé d'établissement d'une liaison dans un système de radiotéléphonie mobile qui comporte un poste d'abonné (MS) qui soutient au moins une première norme de radiotéléphonie mobile et un système de poste de base (BS, RNC) qui soutient la première norme et au moins une deuxième norme de radiotéléphonie mobile, dans lequel :
- le poste d'abonné (MS) signale (SIGn) au système de poste de base (BS, RNC) une demande d'établissement de liaison,
- le système de poste de base (BS, RNC) signale (FPACH) au poste d'abonné (MS) qu'une liaison doit être établie en réponse à sa demande,
- par un canal (PRACHx) qui est associé de manière univoque à l'une des normes qu'il soutient, le poste d'abonné (MS) transmet ensuite au système de poste de base (BS, RNC) des informations supplémentaires destinées à l'établissement d'une liaison et
- la norme soutenue par le poste d'abonné est identifiée à l'aide du canal (PRACHx) utilisé par le poste d'abonné (MS) pour la transmission des informations supplémentaires et le système de poste de base (BS, RNC) communique ensuite avec le poste d'abonné selon cette norme.

2. Procédé selon la revendication 1, dans lequel
- le système de poste de base (BS, RNC) indique préalablement au poste d'abonné (MS) quel canal (PRACHx) de transmission des informations supplémentaires est associé à la norme soutenue par le poste d'abonné et
- pour la transmission des informations supplémentaires, le poste d'abonné (MS) sélectionne le canal (PRACHx) qui correspond à la norme qu'il soutient.

3. Procédé selon la revendication 2, dans lequel l'indication des canaux (PRACHx) associés aux normes de transmission des informations supplémentaires s'effectue par l'intermédiaire d'informations d'organisation (oi) qui sont envoyées par un poste de base (BS) du système de poste de base (BS, RNC) qui fonctionne en diffusion.

4. Procédé selon la revendication 1, dans lequel le canal (PRACHx) à utiliser par le poste d'abonné (MS) qui est destiné à la transmission des informations supplémentaires et qui lui est associé de manière univoque en fonction de la norme qu'il soutient est conservé en mémoire permanente dans le poste d'abonné.

5. Procédé selon l'une des revendications précédentes, dans lequel plusieurs postes d'abonné (MSi) transmettent au poste de base (BS) leur demande d'établissement de liaison avec collision sur un canal d'accès non sélectif.

6. Procédé selon la revendication 5, dans lequel la signalisation de la demande d'établissement d'une liaison s'effectue à chaque fois par indication d'une séquence sélectionnée par le poste d'abonné (MS) dans un groupe de séquences (SIGn) prévues dans ce but.

7. Procédé selon l'une des revendications précédentes, dans lequel le canal (PRACHx) utilisé par le poste d'abonné (MS) pour la transmission des informations supplémentaires se distingue de canaux associés de manière univoque à d'autres normes dans ce but par un code d'étalement, une fenêtre temporelle et/ou une fréquence.

8. Procédé selon l'une des revendications précédentes, dans lequel l'identification de la norme soutenue par le poste d'abonné (MS) s'effectue par un contrôleur de réseau (RNC) du système de poste de base (BS, RNC).

9. Système de poste de base pour un système de radiotéléphonie mobile,
- qui soutient au moins deux normes de radiotéléphonie mobile,
- qui présente un dispositif de réception (RX) pour la réception d'une demande (SIGn) d'au moins un poste d'abonné (MS) en vue de l'établissement d'une liaison,
- qui présente un dispositif d'émission (TX) pour l'émission d'une confirmation au poste d'abonné (MS) qu'une liaison doit être établie en réponse à sa demande,
- dont le dispositif de réception (RX) sert à recevoir du poste d'abonné (MS) des informations supplémentaires qui sont destinées à l'établissement d'une liaison,
- avec une unité de détection (D) qui constate sur quel canal (PRACHx) les informations supplémentaires sont transmises et
- qui communique ensuite avec le poste d'abonné (MS) selon l'une des normes qu'il soutient et qui est identifiée de manière univoque par le canal (PRACHx) utilisé pour la transmission des informations supplémentaires.

10. Système de poste de base selon la revendication 9, dont le dispositif d'émission (TX) sert, pour chacune des normes qu'il soutient, à indiquer au poste d'abonné (MS) au moins un canal (PRACHx) associé de manière univoque à cette norme pour la transmission des informations supplémentaires par le poste d'abonné.

11. Système de poste de base selon la revendication 10, dont le dispositif d'émission (TX) transmet par fonctionnement en diffusion les canaux (PRACHx) associés de manière univoque aux normes et destinés aux informations supplémentaires, sous la forme d'informations d'organisation (oi).
